(19) Europäisches Patentamt
European Patent Office
Office européen des brevets

(11) Publication number: **0 488 119 A2**

# (12) EUROPEAN PATENT APPLICATION

(21) Application number: **91120074.9**

(22) Date of filing: **25.11.91**

(51) Int. Cl.5: **C08L 101/00**, //(C08L101/00, 51:06)

(30) Priority: **26.11.90 JP 322098/90**

(43) Date of publication of application: **03.06.92 Bulletin 92/23**

(84) Designated Contracting States: **DE FR GB**

(71) Applicant: **NIPPON PETROCHEMICALS COMPANY, LIMITED**
**3-1, Uchisaiwaicho 1-chome Chiyoda-ku**
**Tokyo(JP)**
Applicant: **NIPPON OIL AND FATS COMPANY, LIMITED**
**10-1, Yuraku-cho 1-chome**
**Chiyoda-ku Tokyo(JP)**

(72) Inventor: **Hoshino, Yukio**
**2-4-19-406, Maruyama, Isogo-ku**
**Yokohama-shi, Kanagawa-ken(JP)**
Inventor: **Yoshitomi, Hiroaki**
**3-35-3, Ohkubo, Kohnan-ku**
**Yokohama-shi, Kanagawa-ken(JP)**

(74) Representative: **Strehl, Schübel-Hopf, Groening**
**Maximilianstrasse 54 Postfach 22 14 55**
**W-8000 München 22(DE)**

## (54) Mouldable thermoplastic resin composition.

(57) A thermoplastic resin composition having a good moldability is here provided which is obtained by melting and mixing the following components:

(I) 100 parts by weight of an engineering plastics,

(II) 0.1 to 100 parts by weight, based on 100 parts by weight of the resin (I), of a multi-phase structure thermoplastic resin which is a graft copolymer composed of 5 to 95 % by weight of an epoxy group-containing olefin copolymer (A) and 95 to 5 % by weight of a vinyl polymer or copolymer (B) obtained from at least one vinyl monomer, either of both the components being in the state of a dispersion phase having a particle diameter of 0.001 to 10 µm, and

(III) 0.1 to 100 parts by weight, based on 100 parts by weight of the resin (I), of an acid group-containing olefin polymer.



Rank Xerox (UK) Business Services

## BACKGROUND OF THE INVENTION

### (1) Field of the Invention

The present invention relates to a thermoplastic resin composition or an engineering plastic composition having improved moldability and impact resistance, and good appearance of molded articles made therefrom. The composition of the present invention can be widely used as materials for electrical and electronic parts, machine parts, automobile parts and the like.

### (2) Description of the Prior Art

A variety of engineering plastics such as polyester resins (referred to as PES), polyamide resins (referred to as PA), polycarbonate resins (referred to as PC), polyphenylene ether resins (referred to as PPE), polyacetal resins (referred to as POM), polyphenylene sulfide resins (referred to as PPS), ABS have been proposed heretofore.

They are excellent in some properties of heat resistance, dimensional stability, chemical resistance, impact resistance, oil resistance, flame resistance and the like, but are poor in the other properties.

In an attempt to improve the poor impact resistance or heat resistance of some engineering plastics, two processes in the main have been heretofore proposed, one of which comprising blending an impact resistance modifier such as a rubber-like polymer or a filler with an engineering plastics, and another comprising blending together two or more engineering plastics for the preparation of a polymer alloy. However, when an amount of the rubber-like polymer sufficient to improve the poor properties is blended with an engineering plastics, heat resistance of the resulting composition is impaired unpreferably.

Further, a glass fiber-reinforced polyester resin as a filler-containing engineering plastics has an improved heat resistance and dimensional stability, but the range of its use is limited at times because of its poor flowability and rough appearance of molded articles made therefrom due to bleeding of the filler.

Japanese Patent Publication No. 33067/90 describes a typical process for improving these drawbacks wherein a fibrous filler and an inorganic filler are blended simultaneously with the polyester resin in an attempt to improve the appearance of molded articles made therefrom. However, in this case, impact resistance deteriorates. Japanese Patent Publication No. 51500/89 describes a process for improving impact resistance of a glass fiber-reinforced polyester resin wherein an ethylene-glycidyl methacrylate copolymer and a polyolefin are blended with the polyester. In this case, heat resistance of the resulting composition is impaired.

A process for improving such drawback of the composition disclosed in said Publication No. 51500/89 may easily be proposed wherein a glass fiber-reinforced polyolefin and an acid group-modified polyolefin are used. In this case, however, the torque necessary to knead the molten mixture increases remarkably because of the interaction between the ethylene-glycidyl methacrylate and the acid group-modified polyolefin which results in the poor moldability of the composition. The improvements in surface smoothness of molded articles made therefrom are not obtained, compared with the surface of molded articles made from the composition in which the acid group-modified polyolefin alone is blended.

## SUMMARY OF THE INVENTION

The inventors of the present application have intensively researched to solve the above-described problems, and as a result, have found that when a specific multi-phase structure thermoplastic resin is additionally blended with an engineering plastics or its polymer alloy as a compatibility agent, a thermoplastic resin composition can be obtained in which moldability, mechanical properties and the appearance of molded articles made therefrom are excellent, with the inherent features such as heat resistance of the engineering plastics employed therein kept up. The present invention has been completed on the basis of this finding.

The first aspect of the present invention is directed to a thermoplastic resin composition having excellent moldability which is obtained by melting and mixing of the following components:

(I) 100 parts by weight of an engineering plastics,

(II) 0.1 to 100 parts by weight, based on 100 parts by weight of the resin (I), of a multi-phase structure thermoplastic resin which is a graft copolymer composed of 5 to 95 % by weight of an epoxy group-containing olefin copolymer (A) and 95 to 5 % by weight of a vinyl polymer or copolymer (B) obtained from at least one vinyl monomer, either of both the components being in the state of a dispersion phase having a particle diameter of 0.001 to 10 μm, and

(III) 0.1 to 100 parts by weight, based on 100 parts by weight of the resin (I), of an acid group-containing olefin polymer.

The second aspect of the present invention is directed to a thermoplastic resin composition having excellent moldability which is obtained by melting and mixing of the following components:

(I) 100 parts by weight of an engineering plastics,

(II) 0.1 to 100 parts by weight, based on 100 parts by weight of the resin (I), of a multi-phase structure thermoplastic resin which is a graft copolymer composed of 5 to 95 % by weight of an epoxy group-containing olefin copolymer (A) and 95 to 5 % by weight of a vinyl polymer or copolymer (B) obtained from at least one vinyl monomer, either of both the components being in the state of a dispersion phase having a particle diameter of 0.001 to 10 $\mu$m,

(III) 0.1 to 100 parts by weight, based on 100 parts by weight of the resin (I), of an acid group-containing olefin polymer, and

(IV) 1 to 150 parts by weight, based on 100 parts by weight of the resin (I) + (II) + (III), of a filler.

## DESCRIPTION OF THE PREFERRED EMBODIMENTS

Examples of the engineering plastic materials used in the present invention include super high-molecular weight polyethylenes; polypropylenes; poly-1-butenes; poly-4-methyl-1-pentenes; styrene-based polymers such as styrene homopolymers, styrene-acrylonitrile copolymers, styrene-methyl methacrylate-acrylonitrile copolymers, $\alpha$-methyl styrene-styrene-acrylonitrile copolymers, acrylonitrile-butadiene-styrene copolymers (referred to as ABS), methyl-methacrylate-butadiene-styrene copolymers (referred to as MBS), acrylonitrile-EPR-styrene copolymers (referred to as AES), acryl rubber-acrylonitrile-styrene copolymers (referred to as AAS); polymethacrylate resins; polyacetal resins; polyamide resins; polycarbonate resins ; polyphenylene ether resins ; polyester resins; liquid crystal polyester resins; polysulfone resins (referred to as PS); polyether sulfone resins; polyphenylene sulfide resins; polyether ether ketone resins; polyether ketone ketone resins; polyaryl ether ketone resins; polyether ketone resins; polyallylate resins; polyamide imide resins; polyimide resins; polyether imide resins; polyether ester amide resins; fluoroplastics; and mixtures thereof.

Among these resins, particularly preferred are polyester resins, polyamide resins, polycarbonate resins, polyphenylene ether resins, polyacetal resins, ABS resins, polyphenylene sulfide resins, and the like, because they have a good balance between costs and properties such as mechanical properties, heat stability, oil resistance and the like.

Examples of the polymer alloys derived from the engineering plastics described above include PA/PPE, polybutylene terephthalate (referred to as PBT) /PPE, ABS/PA, ABS/PBT, ABS/PPE, ABS/PC, PBT/PC, PPS/PPE, PPS/PA, PS/PPE, and the like.

The multi-phase structure thermoplastic resin (II) used in the present invention is an epoxy group-containing olefin copolymer (A) matrix, or a vinyl polymer or copolymer (B) matrix in which another vinyl polymer or copolymer, or epoxy group-containing olefin copolymer is uniformly dispersed in a spherical form.

The polymer dispersed in the multi-phase structure thermoplastic resin has a particle diameter of 0.001 to 10 $\mu$m, preferably 0.01 to 5 $\mu$m. When the particle diameter of the dispersed polymer is less than 0.001 $\mu$m, or is more than 10 $\mu$m, compatibililty of the multi-phase structure thermoplastic resin with an engineering plastics is poor, impact resistsnce is not improved and the appearance of molded articles is degraded unfavorably.

The vinyl polymer or copolymer (B) in the multi-phase thermoplastic resin (II) used in the present invention has a number average polymerization degree of 5 to 10,000, preferably 10 to 5,000.

When the number average polymerization degree is less than 5, impact resistance of the thermoplastic resin composition of the present invention may be improved, but heat resistance is impaired unpreferably. Inversely, when it is in excess of 10,000, melting becomes incomplete and the resulting high viscosity leads to an insufficient mixing, and moldability and surface gloss are degraded unpreferably.

The epoxy group-containing olefin copolymer used in the multi-phase structure thermoplastic resin (II) regarding to the present invention is a copolymer of an olefin and an unsaturated glycidyl group-containing monomer produced by high-pressure radical polymerization as one example, or a terpolymer of an olefin, an unsaturated glycidyl group-containing monomer and one of other unsaturated monomers, or a multicomponent copolymer. The particularly preferable olefin of the copolymer is ethylene and the preferable copolymer comprises 60 to 99.5 % by weight of ethylene, 0.5 to 40 % by weight of the glycidyl group-containing monomer and 0 to 39.5 % by weight of one of other unsaturated monomers.

Examples of the unsaturated glycidyl group-containing monomers include glycidyl esters such as

glycidyl acrylate, glycidyl methacrylate, itaconic acid monoglycidyl ester, butenetricarboxylic acid monoglycidyl ester, butenetricarboxylic acid diglycidyl ester, butenetricarboxylic acid triglycidyl ester, glycidyl esters of maleic acid, crotonic acid and fumaric acid; glycidyl ethers such as vinyl glycidyl ether, allyl glycidyl ether, glycidyl oxyethyl vinyl ether, styrene-p-glycidyl ether, and p-glycidyl styrene. The particularly preferable ones are glycidyl methacrylate and allyl glycidyl ether.

Examples of other unsaturated monomers include olefins, vinyl esters, $\alpha$ , $\beta$-ethylenic unsaturated carboxylic acids and their derivatives. Typical examples of such unsaturated monomers include olefins such as propylene, butene-1, hexene-1, decene-1, octene-1, and styrene; vinyl esters such as vinyl acetate, vinyl propionate and vinyl benzoate; acrylic acid; methacrylic acid; esters such as methyl, ethyl, propyl, butyl, 2-ethylhexyl, cyclohexyl, dodecyl and octadecyl acrylates or methacrylates; maleic acid; maleic anhydride; itaconic acid; fumaric acid; maleic monoesters and diesters; vinyl chloride; vinyl ethers such as vinyl methyl ether and vinyl ethyl ether; and acrylic amide compounds. Particularly, acrylic and methacrylic esters are preferable.

Typical examples of the epoxy group-containing olefin copolymers (A) include ethylene-glycidyl methacrylate copolymer; ethylene-vinyl acetate-glycidyl methacrylate copolymer; ethylene-ethyl acrylate-glycidyl methacrylate copolymer; ethylene-carbon monoxide-glycidyl methacrylate copolymer; ethylene-glycidyl acrylate copolymer; and ethylene-vinyl acetate-glycidyl acrylate copolymer. Above all, ethylene-glycidyl methacrylate copolymer; ethylene-ethyl acrylate-glycidyl methacrylate copolymer or ethylene-vinyl acetate-glycidyl methacrylate copolymer are preferred. These epoxy group-containing olefin copolymers (A) can be used in a mixture thereof.

The epoxy group-containing olefin copolymer (A) may be prepared by a high-pressure radical polymerization, i.e., by simultaneous or stepwise polymerization of a monomer mixture of 60 to 99.5 % by weight of ethylene, 0.5 to 40 % by weight of one or more unsaturated glycidyl group-containing monomers, and 0 to 39.5 % by weight of at least one of other unsaturated monomers in the presence of 0.0001 to 1 % by weight of a radical polymerization initiator, based on the total weight of all the monomers, at a pressure of 500 to 4,000 $Kg/cm^2$, preferably 1,000 to 3,500 $Kg/cm^2$, at a reaction temperature of 50 to 400 °C, preferably 100 to 350 °C, by use of a chain transfer agent and, if necessary, some auxiliaries in an autoclave or tubular reactor.

Examples of the above-described radical polymerization initiators include usual initiators such as peroxides, hydroperoxides, azo-compounds, amine oxide compounds and oxygen.

Examples of the chain transfer agents include hydrogen, propylene, butene-1, saturated aliphatic hydrocarbons having 1 to 20 carbon atoms such as methane, ethane, propane , butane, isobutane, n-hexane, n-heptane and cycloparaffins; halogen-substituted hydrocarbons such as chloroform and carbon tetrachloride; saturated aliphatic alcohols such as methanol, ethanol, propanol and isopropanol; saturated aliphatic carbonyl compounds having 1 to 20 or more carbon atoms such as carbon dioxide, acetone amd methyl ethyl ketone; and aromatic compounds such as toluene, diethyl-benzene and xylenes.

Other examples of the epoxy group-containing olefin copolymer (A) used in the present invention include a modified compound prepared by addition of the above-described glycidyl group-containing monomer to a conventional olefin homopolymer or copolymer.

Examples of the above-described olefin homopolymers include low-density, medium-density and high-density polyethylenes, a polypropylene, a polybutene-1 and a poly-4-methylpentene-1; and examples of the above-described olefin copolymers include an ethylene-$\alpha$-olefin copolymer, mainly comprising ethylene, such as ethylene-propylene copolymer, ethylene-butene-1-copolymer, ethylene-hexene-1-copolymer, ethylene-4-methylpentene-1-copolymer, ethylene-octene-1-copolymer; a propylene-$\alpha$-olefin copolymer, mainly comprising propylene, such as propylene-ethylene block copolymer; ethylene-vinyl acetate copolymer; ethylene-acrylic acid copolymer or ethylene-methacrylic acid copolymer; copolymers of ethylene with methyl, ethyl, propyl, isopropyl or butyl acrylate and methacrylate; ethylene-maleic acid copolymer; ethylene-propylene copolymer rubber; ethylene-propylene-diene-copolymer rubber; liquid polybutadiene; ethylene-vinyl acetate-vinyl chloride copolymer; and mixtures thereof.

Typical examples of the vinyl polymers or copolymers (B) in the multi-phase structure thermoplastic resin (II) used in the present invntion include a polymer or copolymer prepared by polymerization of one or more vinyl monomers such as a vinyl aromatic monomer, for example, styrene, a nucleus-substituted styrene such as methylstyrene, dimethylstyrene, ethylstyrene, isopropylstyrene and chlorostyrene, an $\alpha$-substituted styrene such as $\alpha$-methyl styrene and $\alpha$-ethylstyrene; an acrylate and methacrylate monomer, for example, an alkyl ester having 1 to 7 carbon atoms of acrylic acid or methacrylic acid such as methyl, ethyl, propyl, isopropyl or butyl acrylate or methacrylate; acrylonitrile or methacrylonitrile; a vinyl ester monomer such as vinyl acetate or vinyl propionate; acrylamide or methacrylamide; and monoesters or diesters of maleic anhydride or maleic acid.

In a preferred embodiment of the present invention, the multi-phase structure thermoplastic resin (II) is a graft polymer which is obtained by melting and mixing of a graft polymerization precursor (C) wherein said precursor is prepared by copolymerization of at least one vinyl monomer with at least one radical polymerizaboe or copolymerizable organic peroxide described hereinafter in the particles of the epoxy group-containing olefin copolymer.

In another preferred embodiment, the multi-phase structure thermoplastic resin (II) is a graft polymer which is obtained by melting and mixing of the following components:

1 to 99 % by weight of the graft polymerization precursor (C), and

1 to 99 % by weight of the epoxy group-containing olefin copolymer (A) or the vinyl polymer or copolymer(B) obtained from at least one vinyl monomer.

Above-described radical polymerizable or copolymerizable organic peroxides are compounds represented by the general formula (a) or (b):

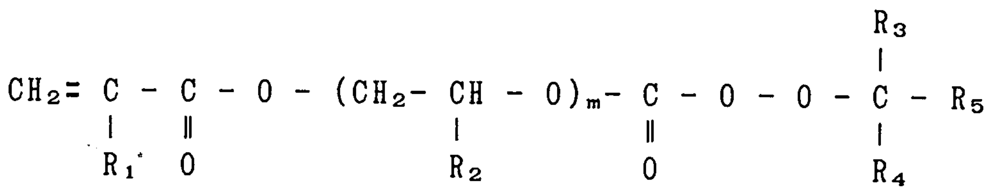

.....(a)

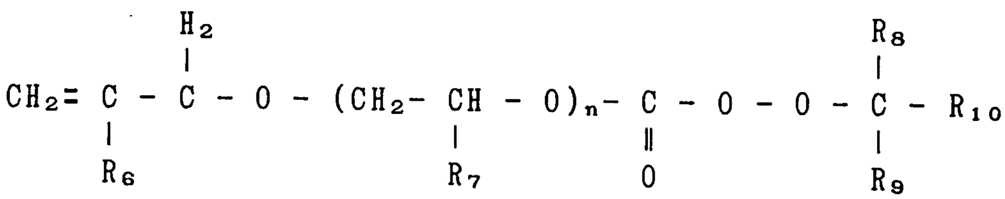

.....(b)

wherein R, is a hydrogen atom or an alkyl group having 1 or 2 carbon atoms, each of $R_2$ and $R_7$ is a hydrogen atom or a methyl group, $R_6$ is a hydrogen atom or an alkyl group having 1 to 4 carbon atoms, each of $R_3$, $R_4$, $R_8$ and $R_9$ is an alkyl group having 1 to 4 carbon atoms, each of $R_5$ and $R_{10}$ is an alkyl group having 1 to 12 carbon atoms, a phenyl group, an alkyl-substituted phenyl group or a cycloalkyl group having 3 to 12 carbon atoms, m is 1 or 2, and n is 0, 1 or 2.

Typical examples of the radical polymerizable or copolymerizable organic peroxides represented by the general formula (a) include t-butylperoxyacryloyloxyethyl carbonate, t-amylperoxyacryloyloxyethyl carbonate, t-hexylperoxyacryloyloxyethyl carbonate, 1,1,3,3-tetramethylbutylperoxyacryloyloxyethyl carbonate, cumylperoxyacryloyloxyethyl carbonate, p-isopropylperoxyacryloyloxyethyl carbonate, t-butylperoxymethacryloyloxyethyl carbonate, t-amylperoxymethacryloyloxyethyl carbonate, t-hexylperoxymethacryloyloxyethyl carbona 1,1,3,3-tetramethylbutylperoxymethacryloyloxyethyl carbonate, cumylperoxymethacryloyloxyethyl carbonate, p-isopropylcumylperoxymethacryloyloxyethyl carbonate, t-butylperoxyacryloyloxyethoxyethyl carbonate, t-amylperoxyacryloyloxyethoxyethyl carbonate, t-hexylperoxyacryloyloxyethoxyethyl carbonate, 1,1,3,3-tetramethylbutylperoxyacryloyloxyethoxyethyl carbonate, cumyperoxyacryloyloxyethoxyethyl carbonate, p-isopropylperoxyacryloyloxyethoxyethyl carbonate, t-butylperoxymethacryloyloxyethoxyethyl carbonate, t-amylperoxymethacryloyloxyethoxyethyl carbonate, t-hexylperoxymethacryloyloxyethoxyethyl carbonate, 1,1,3,3-tetramethylbutylperoxymethacryloyloxyethoxyethyl carbonate, cumylperoxymethacryloyloxyethoxyethyl carbonate, p-isopropylperoxymethacryloyloxyethoxyethyl carbonate, t-butylperoxyacryloyloxyisopropyl carbonate, t-amylperoxyacryloyloxyisopropyl carbonate, t-hexylperoxyacryloyloxyisopropyl carbonate, 1,1,3,3-tetramethylbutylperoxyacryloyloxyisopropyl carbonate, cumylperoxyacryloyloxyisopropyl carbonate, p-isopropylperoxyacryloyloxyisopropyl carbonate, t-butylperoxymethacryloyloxyisopropyl carbonate, t-amylperoxymethacryloyloxyisopropyl carbonate, t-hexyperoxymethacryloyloxyisopropyl carbonate, 1,1,3,3-tetramethylbutylperoxymethacryloyloxyisopropyl carbonate, cumylperoxymethacryloyloxyisopropyl carbonate, p-isopropylperoxymethacryloyloxyisopropyl carbonate

Typical examples of the compounds represented by the general formula (b) include t-butylperoxyallyl carbonate, t-amylperoxyallyl carbonate, t-hexylperoxyallyl carbonate, 1,1,3,3-tetramethylbutylperoxyallyl carbonate, p-menthaneperoxyallyl carbonate, cumylperoxyallyl carbonate, t-butylperoxymethallyl carbonate, t-amylperoxymethallyl carbonate, t-hexylperoxymethallyl carbonate, 1,1,3,3-tetramethylbutylperoxymethallyl carbonate, p-menthaneperoxymethallyl carbonate, cumylperoxymethallyl carbonate, t-butylperoxyallyloxyethyl carbonate, t-amylperoxyallyloxyethyl carbonate, t-butylperoxymethallyloxyethyl carbonate, t-amylperoxymethallyloxyethyl carbonate, t-hexylperoxymethallyloxyethyl carbonate, t-butylperoxyallyloxyisopropyl carbonate, t-amylperoxyallyloxyisopropyl carbonate, t-hexylperoxyallyloxyisopropyl carbonate, t-butylperoxymethallyloxyisopropyl carbonate, t-amylperoxymethallyloxyisopropyl carbonate, t-hexylperoxymethallyloxyisopropyl carbonate.

Of these compounds, preferable ones are t-butylperoxyacryloyloxyethyl carbonate, t-butylperoxymethacryloyloxyethyl carbonate, t-butylperoxyallyl carbonate and t-butylperoxymethallyl carbonate.

As a matter of convenience, it is preferable to provide in advance a graft polymerization precursor (C) in advance which is prepared by copolymerization of at least one vinyl monomer with at least one radical polymerizable organic peroxide described above in the particles of the epoxy group-containing olefin copolymer, because when the precursor (C) is kneaded by use of an usual kneader such as an kneader extruder, the precursor (C) easily gives a multi-phase structure thermoplastic resin in which another polymer phase having a particle diameter of 0.001 to 10 $\mu$m has been dispersed.

Examples of the acid group-containing olefin polymer (III) include a random or block copolymer of an unsaturated carboxylic acid with an olefin such as ethylene, propylene, butene-1 or styrne; or an unsaturated carboxylic acid grafted-olefin polymer.

Examples of said olefin polymer include a homopolymer such as a low-density, medium-density or high-density polyethylene, a polypropylene, a polybutene-1 and a poly-4-methylpentene-1; and an ethylene-$\alpha$-olefin copolymer mainly comprising ethylene, such as ethylene-propylene copolymer, ethylene-butene-1-copolymer, ethylene-hexene-1-copolymer, ethylene-4-methylpentene-1-copolymer, ethylene-octene-1-copolymer; a propylene- $\alpha$-olefin copolymer mainly comprising propylene, such as propylene-ethylene block copolymer; ethylene-vinyl acetate copolymer; ethylene-acrylic acid copolymer or ethylene-methacrylic acid copolymer; copolymers of ethylene with methyl, ethyl, propyl, isopropyl or butyl acrylate or methacrylate; ethylene-maleic acid anhydride copolymer; ethylene-propylene copolymer rubber; ethylene-propylene-diene-copolymer rubber ; liquid polybutadiene; ethylene-vinyl acetate-vinyl chloride copolymer; and mixtures thereof.

Examples of the unsaturated acid include a monobasic acid such as acrylic acid, methacrylic acid; a dibasic acid such as maleic acid anhydride, itaconic acid anhydride, chloromaleic acid anhydride, citraconic acid anhydride, butenylsuccinic acid anhydride, tetrahydrophthalic acid anhydride, their derivatives, and mixtures thereof, with the most preferred one being an unsaturated carboxylic acid anhydride such as maleic acid anhydride.

Any manufacturing methods for the acid group-containing olefin polymers may be employed. The most economical and convenient method comprises the steps of melting a mixture of one kind of olefin polymer described above and an unsaturated carboxylic acid anhydride in the presence of a peroxide and kneading the molten mixture for the conduct of graft polymerization.

Examples of the acid group-containing olefin polymer (III) obtained by the process include an ethylene-acrylic acid copolymer, an ethylene-methacrylic acid copolymer, a styrene-maleic acid copolymer, a polyethylene grafted-maleic acid anhydride copolymer, a polypropylene grafted-maleic acid anhydride copolymer.

Examples of the filler (IV) used in the present invention include magnesium hydroxide, aluminum hydroxide, calcium carbonate, magnesium carbonate, calcium sulfate, calcium silicate, clay, diatomaceous earth, talc, alumina, glass powder, iron oxide, metallic powder, graphaite, silicon carbide, silicon nitride, silica, boron nitride, aluminum nitride, carbon black, mica, glass plate, sericite, pyrophyllite, aluminum flake, graphite, Shirasu balloon, metallic balloon, glass balloon, pumice, glass fiber, carbon fiber, graphite fiber, whisker, metallic fiber, silicon carbide fiber, asbestos and wollastonite, and mixtures thereof, with the most preferable fillers being fibrous fillers.

The surface of the above-described filler is preferably treated by use of stearic acid, oleic acid, palmitic acid or a metallic salt thereof, paraffin wax, polyethylene wax or a modified material thereof.

When the content of the filler is in excess of 150 parts by weight, the impact strength of molded articles made therefrom deteriorates unpreferably. Inversely, when it is less than 1 part by weight, any modification effect cannot be exerted.

The thermoplastic resin composition of the present invention may be manufactured by melting and mixing of the above components at a temperature of 180 to 350 °C, preferably 200 to 330 °C.

When melting and mixing are carried out at a temperature of 180°C or lower, melting becomes incomplete and the resulting high viscosity leads to an insufficient mixing unpreferably. When mixing is conducted at a temperature of 350°C or higher, docomposition or gelation of the composition occurs unpreferably.

In melting and mixing, there may be used a usual kneader such as a mixing roll, a biaxial extruder, a Bunbury's mixer, a kneader mixer, a kneading extruder, and mixing rolls.

In the present invention, various additives can be incorporated into the composition, so far as they do not deviate from the gist of the present invention. Examples of such usable additives include a colorant, a heat stabilizer, an antioxidant, an ultraviolet inhibitor, a lubricant, a releasing agent, a crystallizing agent, an antiblocking agent, a plasticizer, a flame retardant, and an antistatic agent.

Now, the present invention will be described in detail in reference to examples.

Preparation Example 1

Preparation of Multi-phase Structure Thermoplastic Resin (IIA)

In a 5-liter stainless steel autoclave was placed 2,500 g of pure water, and 2.5 g of polyvinyl alcohol was dissolved as a suspending agent. In the solution was placed 700 g of an ethylene-glycidyl methacrylate copolymer (glycidyl methacrylate content is 15 % by weight) (Rexpearl RA-3150, a product of Nippon Petrochemicals Co., Ltd.) as an epoxy group-containing olefin copolymer (A), followed by stirring to suspend the polymer therein under nitrogen atmosphere. Separately, in 300 g of methyl methacrylate as a vinyl monomer were dissolved 1.5 g of benzoylperoxide as a radical polymerization initiator (Nyper-B; a product of Nippon Oils & Fats Co., Ltd.) and 6 g of t-butylperoxymethacryloyloxyethyl carbonate as a radical polymerizable or copolymerizable organic peroxide, and the resulting solution was then placed with 0.6 g of n-dodecyl mercaptan as a molecular weight regulator in the above-mentioned autoclave, followed by stirring. Afterward, the autoclave was heated to a temperature of 60 to 65°C, and stirring was continued for 2 hours, so that the epoxy group-containing olefin copolymer was impregnated with the vinyl monomer containing the radical polymerization initiator and the radical polymerizable or copolymerizable organic peroxide. After it had been confirmed that the total amount of the impregnated vinyl monomer, radical polymerizable or copolymerizable organic peroxide and radical polymerization initiator was 50% by weight or more of the original total weight thereof, the temperature of the mixture was raised to a level of 80 to 85°C, and this temperature was maintained for 7 hours for the completion of polymerization, followed by water washing and drying, whereby a graft polymerization precursor (C) was obtained. The number average polymerization degree of the methyl methacrylate polymer in said precursor was 700.

Next, this graft polymerization precursor was extruded at 200 °C by use of a single screw extruder ("Labo" plasto-mill, a product of Toyo Seiki Seisaku-sho Ltd.) for the conduct of graft polymerization, whereby a multi-phase structure thermoplastic resin (IIA) was obtained.

The thus obtained multi-phase structure thermoplastic resin was then observed by use of a scanning electron microscope (JEOL JSM T300; a product of JEOL Ltd.), and it was found that the resin was a multi-phase structure thermoplastic resin in which spherical resin particles having a diameter of 0.1 to 0.2 μm were uniformly dispersed.

Preparation Example 2

Preparation of Multi-phase Structure Thermoplastic Resin (IIB)

The same procedure as in Preparation Example 1 was repeated with the exception that 300 g of styrene was used in place of 300 g of methyl methacrylate and the n-dodecyl mercaptan was not used, whereby a multi-phase structure thermoplastic resin (IIB) was obtained.

Examples 1 and 2, Comparative Examples 1 to 5

A polybutylene terephthalate resin (Barlox 310-1001, a product of Nippon G.E. Plastics Co., Ltd.) as a polyester resin, the multi-phase structure thermoplastic resin (IIA) obtained in Preparation Example 1, a maleic acid anhydride-modified polyethylene resin (NISSEKI N-Polymer R 1200, a product of Nippon Petrochemicals Co., Ltd.) as an acid group -containing olefin polymer, and glass fiber (RX-EMFP, a product of microglass milled fiber made by Nippon Glass Fiber Co., Ltd.) were kneaded together under molten state at 250°C by use of the "Labo" plasto-mill in a ratio as spcified in Table 1, and extruded with an extruder for the preparation of specimens. A measurement for the moldability was the torque necessary to knead the

blend under molten state.

Although satisfactory results of moldability and appearance tests were obtained in comparative Example 2 wherein a maleic anhydride-modified polyethylene resin (referred to as MPE) alone was used, heat distortion temperature fell unpreferably.

When an ethylene-glycidyl methacrylate copolymer (referred to as EGMA) which is a raw material of the multi-phase structure thermoplastic resin (IIA) was used, a pronounced increase in the torque necessary to knead the blend was measured in Comparative Example 3, indicating that the copolymer reacts with the maleic acid anhydride-modified polyethylene. Because of this, the appearance of molded articles was degraded and distortion temperature fell unfavorably.

Examples 3 to 6, Comparative Examples 6 to 15

The same procedure as in Example 1 was repeated with the exception that a polyamide 66 (Amylan CM 3001, a product of Toray Co., Ltd.) in place of the polybutylene terephthalate was used. The results are set forth in Tables 2 and 3.

Examples 7 to 10, Comparative Examples 16 to 25

The same procedure as in Example 1 was repeated with the exception that a polyphenylene ether resin (Noryl 534J-801, a product of Engineering Plastics Co., Ltd.) in place of the polybutylene terephthalate was used. The results are set forth in Tables 4 and 5.

Examples 11 to 14, Comparative Examples 26 to 35

The same procedure as in Example 1 was repeated with the exception that a polycarbonate resin (Panlight L-1250, a product of Teijin Kasei Co., Ltd.) in place of the polybutylene terephthalate was used. The results are set forth in Tables 6 and 7.

Examples 15 to 18, Comparative Examples 36 to 45

The same procedure as in Example 1 was repeated with the exception that a ABS resin (Toyolac 500, a product of Toray Co., Ltd.) in place of the polybutylene terephthalate and the multi-phase structure thermoplastic resin (IIB) in Preparation Example 2 in place of the resin (IIA) were used. The results are set forth in Tables 8 and 9.

Examples 19 to 22, Comparative Examples 46 to 55

The same procedure as in Example 1 was repeated with the exception that a polyoxymethylene resin (Delrin 500, a product of E.I. duPont) in place of the polybutylene terephthalate and the multi-phase structure thermoplastic resin (IIB) in Preparation Example 2 in place of the resin (IIA) were used. The results are set forth in Tables 10 and 11.

Eamples 23 to 26, Comparative Examples 56 to 65

The same procedure as in Example 1 was repeated with the exception that a polyphenylene sulfide (Lighton R-4, a product of Phillips Petroleum Co., Ltd.) in place of the polybutylene terephthalate, the multi-phase structure thermoplastic resin (IIB) in Preparation Example 2 in place of the resin (IIA) and a melting and mixing temperature of 280 °C in place of 250 °C were used. The results are set forth in Tables 12 and 13.

It will be apparent from the above description and Examples that the thermoplastic resin compositions of the present invention prepared by use of a specific multi-phase structure thermoplastic resin have a good moldability and improved mechanical properties, and can provide molded products made therefrom with a smooth surface without much effecting the inherent features such as heat stability of the specific engineering plastics employed in the composition.

Table 1

| | Example | | Comparative Example | | | | |
|---|---|---|---|---|---|---|---|
| | 1 | 2 | 1 | 2 | 3 | 4 | 5 |
| P B T (parts by weight) | 55 | 60 | 70 | 60 | 55 | 60 | 65 |
| Multi-phase Structure | | | | | | | |
| Thermoplastic Resin (IIA) | 5 | 3 | | | | | |
| (parts by weight) | 5 | 3 | | | | | |
| M P E (parts by weight) | 10 | 7 | | 10 | 10 | 7 | |
| Milled fiber | | | | | | | |
| (parts by weight) | 30 | 30 | 30 | 30 | 30 | 30 | 30 |
| E G M A | | | | | | | |
| (parts by weight) | | | | | 5 | 2 | 3 |
| E M M A | | | | | | | |
| (parts by weight) | | | | | | 1 | 2 |
| Heat Distortion Temperature | 71.7 | 76.8 | 84.4 | 64.3 | 56.3 | 66.6 | 85.0 |
| 18.6 $Kg/cm^2$ (℃) | | | | | | | |
| Torque necessary to knead (Kg-m) | 0.75 | 0.62 | 0.57 | 0.44 | 1.95 | 1.10 | 0.88 |
| Appearance | A | A | C | A | C | B | C |

Appearance A: excellent B: good C: poor

Table 2

| | Example | | Comparative Example | | | | |
|---|---|---|---|---|---|---|---|
| | 3 | 4 | 6 | 7 | 8 | 9 | 10 |
| Polyamide 66 (parts by weight) | 85 | 90 | 100 | 90 | 85 | 85 | 95 |
| Multi-phase Structure Thermoplastic Resin (IIA) (parts by weight) | 5 | 3 | | | | | 5 |
| M P E (parts by weight) | 10 | 7 | | 10 | 10 | 10 | |
| M G M A (parts by weight) | | | | | 5 | 3 | |
| E M M A (parts by weight) | | | | | | 2 | |
| Heat Distortion Temperature 18.6 Kg/cm² (℃) | 80.6 | 81.3 | 78.2 | 58.6 | 56.7 | 68.3 | 76.2 |
| Torque necessary to knead (Kg-m) | 0.49 | 0.46 | 0.31 | 0.42 | 0.93 | 0.84 | 0.48 |
| Notched Izod Impact (Kg-cm/cm) | 9.8 | 8.6 | 5.3 | 6.3 | 5.8 | 5.5 | 6.3 |

Table 3

| | Example | | Comparative Example | | | | |
|---|---|---|---|---|---|---|---|
| | 5 | 6 | 11 | 12 | 13 | 14 | 15 |
| Polyamide 66 (parts by weight) | 60 | 65 | 70 | 63 | 60 | 60 | 67 |
| Multi-phase Structure Thermoplastic Resin (IIA) (parts by weight) | 3 | 2 | | | | | 3 |
| M P E (parts by weight) | 7 | 3 | | 7 | 7 | 7 | |
| Milled fiber (parts by weight) | 30 | 30 | 30 | 30 | 30 | 30 | 30 |
| E G M A (parts by weight) | | | | | 3 | 2 | |
| E M M A (parts by weight) | | | | | | 1 | |
| Heat Distortion Temperature 18.6 $Kg/cm^2$ (℃) | 109.8 | 123.3 | 117.3 | 87.5 | 78.2 | 92.8 | 105.8 |
| Torque necessary to knead (Kg-m) | 0.55 | 0.51 | 0.46 | 0.41 | 1.63 | 1.21 | 0.68 |
| Appearance | A | A | C | A | C | B | B |

Appearance A: excellent B: good C: poor

Table 4

| | Example | | Comparative Example | | | | |
|---|---|---|---|---|---|---|---|
| | 7 | 8 | 16 | 17 | 18 | 19 | 20 |
| P P E (parts by weight) | 85 | 90 | 100 | 90 | 85 | 85 | 95 |
| Multi-phase Structure | | | | | | | |
| Thermoplastic Resin (IIA) | | | | | | | |
| (parts by weight) | 5 | 3 | | | | | 5 |
| M P E | | | | | | | |
| (parts by weight) | 10 | 7 | | 10 | 10 | 10 | |
| E G M A | | | | | | | |
| (parts by weight) | | | | | 5 | 3 | |
| E M M A | | | | | | | |
| (parts by weight) | | | | | | 2 | |
| Heat Distortion Temperature 18.6 Kg/cm² (℃) | 120.4 | 122.3 | 125.4 | 112.7 | 110.8 | 115.3 | 122.7 |
| Torque necessary to knead (Kg-m) | 0.61 | 0.60 | 0.88 | 0.54 | 0.67 | 0.66 | 0.67 |
| Notched Izod Impact (Kg-cm/cm) | 25.1 | 24.8 | 18.5 | 19.4 | 18.8 | 19.5 | 19.9 |

Table 5

| | Example | | Comprative Example | | | | |
|---|---|---|---|---|---|---|---|
| | 9 | 10 | 21 | 22 | 23 | 24 | 25 |
| PPE (parts by weight) | 60 | 65 | 70 | 63 | 60 | 60 | 67 |
| Multi-phase Structure Thermoplastic Resin (IIA) (parts by weight) | 3 | 2 | | | | 3 | 3 |
| MPE (parts by weight) | 7 | 3 | | 7 | 7 | 7 | |
| Milled fiber (parts by weight) | 30 | 30 | 30 | 30 | 30 | 30 | 30 |
| EGMA (parts by weight) | | | | | 3 | 2 | |
| EMMA (parts by weight) | | | | | | 1 | |
| Heat Distortion Temperature 18.6 $Kg/cm^2$ (℃) | 143.5 | 145.3 | 145.8 | 110.4 | 104.5 | 117.2 | 136.8 |
| Torque necessary to knead (Kg-m) | 1.58 | 1.57 | 1.88 | 1.54 | 1.67 | 1.66 | 1.74 |
| Appearance | A | A | C | A | C | B | B |

Appearance A: excellent B: good C: poor

Table 6

| | Example | | Comparative Example | | | | |
|---|---|---|---|---|---|---|---|
| | 11 | 12 | 26 | 27 | 28 | 29 | 30 |
| P C (parts by weight) | 85 | 90 | 100 | 90 | 85 | 85 | 95 |
| Multi-phase Structure Thermoplastic Resin (IIA) (parts by weight) | 5 | 3 | | | | | 5 |
| M P E (parts by weight) | 10 | 7 | | 10 | 10 | 10 | |
| E G M A (parts by weight) | | | | | 5 | 3 | |
| E M M A (parts by weight) | | | | | | 2 | |
| Heat Distortion Temperature 18.6 $Kg/cm^2$ (℃) | 133.5 | 135.8 | 131.6 | 112.1 | 108.6 | 108.8 | 127.6 |
| Torque necessary to knead (Kg-m) | 0.71 | 0.70 | 0.73 | 0.62 | 0.78 | 0.79 | 0.69 |
| Notched Izod Impact (Kg-cm/cm) | 92.2 | 94.8 | 83.5 | 79.4 | 75.8 | 77.4 | 89.9 |

Table 7

| | Example | | Comparative Example | | | | |
|---|---|---|---|---|---|---|---|
| | 13 | 14 | 31 | 32 | 33 | 34 | 35 |
| P C (parts by wt.) | 60 | 65 | 70 | 63 | 60 | 60 | 67 |
| Multi-phase Structure Thermoplastic Resin (IIA) (parts by weight) | 3 | 2 | | | | 3 | 3 |
| M P E (parts by weight) | 7 | 3 | | 7 | 7 | 7 | |
| Milied fiber (parts by weight) | 30 | 30 | 30 | 30 | 30 | 30 | 30 |
| E G M A (parts by weight) | | | | | 3 | 2 | |
| E M M A (parts by weight) | | | | | | 1 | |
| Heat Distortion Temperature 18.6 $Kg/cm^2$ (℃) | 147.2 | 148.2 | 144.6 | 133.5 | 137.1 | 138.3 | 140.5 |
| Torque necessary to knead (Kg-m) | 1.65 | 1.67 | 1.73 | 1.65 | 1.67 | 1.68 | 1.71 |
| Appearance | A | A | C | A | C | B | B |

Appearance A: excellent B: good C: poor

Table 8

| | Example | | Comparative Example | | | | |
|---|---|---|---|---|---|---|---|
| | 15 | 16 | 36 | 37 | 38 | 39 | 40 |
| A B S (parts by weight) | 85 | 90 | 100 | 90 | 85 | 85 | 85 |
| Multi-phase Structure Thermoplastic Resin (IIB) (parts by weight) | 5 | 3 | | | | | 5 |
| M P E (parts by weight) | 10 | 7 | | 10 | 10 | 10 | |
| E G M A (parts by weight) | | | | | 5 | 3 | |
| E M M A (parts by weight) | | | | | | 2 | |
| Heat Distortion Temperature 18.6 $Kg/cm^2$ (℃) | 92.6 | 90.7 | 90 | 87.4 | 86.9 | 87.0 | 93.1 |
| Torque necessary to knead (Kg-m) | 0.53 | 0.52 | 0.42 | 0.47 | 0.50 | 0.49 | 0.52 |
| Notched Izod Impact (Kg-cm/cm) | 11.2 | 10.6 | 11.0 | 10.5 | 10.5 | 10.2 | 11.7 |

Table 9

| | Example | | Comparative Example | | | | |
|---|---|---|---|---|---|---|---|
| | 17 | 18 | 41 | 42 | 43 | 44 | 45 |
| A B S (parts by wt.) | 80 | 65 | 70 | 63 | 60 | 60 | 67 |
| Multi-phase Structure Thermoplastic Resin (IIB) (parts by weight) | 3 | 2 | | | | | 3 |
| M P E (parts by weight) | 7 | 3 | | 7 | 7 | 7 | |
| Miield fiber (parts by weight) | 30 | 30 | 30 | 30 | 30 | 30 | 30 |
| E G M A (parts by weight) | | | | | 3 | 2 | |
| E M M A (parts by weight) | | | | | | 1 | |
| Heat Distortion Temperature 18.6 $Kg/cm^2$ (℃) | 129.1 | 125.2 | 113.6 | 106.8 | 108.2 | 110.0 | 120.1 |
| Torque necessary to knead (Kg-m) | 1.51 | 1.49 | 1.39 | 1.39 | 1.41 | 1.39 | 1.41 |
| Appearance | A | A | C | A | C | B | B |

Appearance A: excellent B: good C: poor

Table 10

| | Example | | Comparative Example | | | | |
|---|---|---|---|---|---|---|---|
| | 19 | 20 | 46 | 47 | 48 | 49 | 50 |
| P O M (parts by weight) | 85 | 90 | 100 | 90 | 85 | 85 | 95 |
| Multi-phase Structure Thermoplastic Resin (IIB) (parts by weight) | 5 | 3 | | | | | 5 |
| M P E (parts by weight) | 10 | 7 | | 10 | 10 | 10 | |
| E G M A (parts by weight) | | | | | 5 | 3 | |
| E M M A (parts by weight) | | | | | | 2 | |
| Heat Distortion Temperature 18.6 Kg/cm² (℃) | 138.2 | 139.6 | 136 | 131.2 | 129.6 | 128.0 | 137.2 |
| Torque necessary to knead (Kg-m) | 0.74 | 0.75 | 0.79 | 0.70 | 0.69 | 0.72 | 0.76 |
| Notched Izod Impact (Kg-cm/cm) | 7.0 | 7.9 | 7.5 | 6.1 | 7.0 | 6.5 | 8.2 |

Table 11

| | Example | | Comparative Example | | | | |
|---|---|---|---|---|---|---|---|
| | 21 | 22 | 51 | 52 | 53 | 54 | 55 |
| P O M (parts by wt.) | 60 | 65 | 70 | 63 | 60 | 60 | 67 |
| Multi-phase Structure Thermoplastic Resin (IIB) (parts by weight) | 3 | 2 | | | | 3 | 3 |
| M P E (parts by weight) | 7 | 3 | | 7 | 7 | 7 | |
| Milled fiber (parts by weight) | 30 | 30 | 30 | 30 | 30 | 30 | 30 |
| E G M A (parts by weight) | | | | | 3 | 2 | |
| E M M A (parts by weight) | | | | | | 1 | |
| Heat Distortion Temperature 18.6 $Kg/cm^2$ (℃) | 153.8 | 153.2 | 150.6 | 142.3 | 144.3 | 143.2 | 148.5 |
| Torque necessary to knead (Kg-m) | 1.64 | 1.66 | 1.71 | 1.66 | 1.63 | 1.69 | 1.70 |
| Appearance | A | A | C | A | C | B | B |

Appearance A: excellent B: good C: poor

Table 12

| | Example | | Comparative Example | | | | |
|---|---|---|---|---|---|---|---|
| | 23 | 24 | 56 | 57 | 58 | 59 | 60 |
| P P S (parts by weight) | 85 | 90 | 100 | 90 | 85 | 85 | 95 |
| Multi-phase Structure Thermoplastic Resin (IIB) (parts by weight) | 5 | 3 | | | | | 5 |
| M P E (parts by weight) | 10 | 7 | | 10 | 10 | 10 | |
| E G M A (parts by weight) | | | | | 5 | 3 | |
| E M M A (parts by weight) | | | | | | 2 | |
| Heat Distortion Temperature 18.6 $Kg/cm^2$ (℃) | 258 | 261 | 260 | 231 | 232 | 232 | 262 |
| Torque necessary to knead (Kg-m) | 0.77 | 0.76 | 0.82 | 0.77 | 0.78 | 0.76 | 0.80 |
| Notched Izod Impact (Kg-cm/cm) | 8.7 | 9.1 | 9.0 | 8.5 | 8.6 | 8.5 | 9.2 |

Table 13

| | Example | | Comparative Example | | | | |
|---|---|---|---|---|---|---|---|
| | 25 | 26 | 61 | 62 | 63 | 64 | 65 |
| P P S (parts by wt.) | 60 | 65 | 70 | 63 | 60 | 60 | 67 |
| Multi-phase Structure Thermoplastic Resin (11B) (parts by weight) | 3 | 2 | | | | 3 | 3 |
| M P E (parts by weight) | 7 | 3 | | 7 | 7 | 7 | |
| Milled fiber (parts by weight) | 30 | 30 | 30 | 30 | 30 | 30 | 30 |
| E G M A (parts by weight) | | | | | 3 | 2 | |
| E M M A (parts by weight) | | | | | | 1 | |
| Heat Distortion Temperature 18.6 Kg/cm² (℃) | 292 | 293 | 280 | 266 | 268 | 272 | 288 |
| Torque necessary to knead (Kg-m) | 1.72 | 1.69 | 1.70 | 1.64 | 1.70 | 1.65 | 1.69 |
| Appearance | A | A | C | A | C | B | B |

Appearance A: excellent B: good C: poor

## Claims

1. A thermoplastic resin composition having a good moldability which is obtained by melting and mixing of the following components:

(I) 100 parts by weight of an engineering plastics,
(II) 0.1 to 100 parts by weight, based on 100 parts by weight of the resin (I), of a multi-phase structure thermoplastic resin which is a graft copolymer composed of 5 to 95 % by weight of an epoxy group-containing olefin copolymer (A) and 95 to 5 % by weight of a vinyl polymer or copolymer (B) obtained from at least one vinyl monomer, either of both the components being in the state of a dispersion phase having a particle diameter of 0.001 to 10 $\mu$m, and
(III) 0.1 to 100 parts by weight, based on 100 parts by weight of the resin (I), of an acid group-containing olefin polymer.

**2.** A thermoplastic resin composition having a good moldability which is obtained by melting and mixing the following components:
(I) 100 parts by weight of an engineering plastics,
(II) 0.1 to 100 parts by weight, based on 100 parts by weight of the resin (I), of a multi-phase structure thermoplastic resin which is a graft copolymer composed of 5 to 95 % by weight of an epoxy group-containing olefin copolymer (A) and 95 to 5 % by weight of a vinyl polymer or copolymer (B) obtained from at least one vinyl monomer, either of both the components being in the state of a dispersion phase having a particle diameter of 0.001 to 10 $\mu$m,
(III) 0.1 to 100 parts by weight, based on 100 parts by weight of the resin (I), of an acid group-containing olefin polymer, and
(IV) 1 to 150 parts by weight, based on 100 parts by weight of the resin (I) + (II) + (III), of a filler.

**3.** A thermoplastic resin composition according to claim 1 or 2 wherein said engineering plastics is selected from the group consisting essentially of polyester resins, polyamide resins, polycarbonate resins, polyphenylene ether resins, polyacetal resins, polyphenylene sulfide resins, ABS resins, and mixtures thereof.

**4.** A thermoplastic resin composition according to claim 1 or 2 wherein said multi-phase structure thermoplastic resin is a graft polymer which is obtained by melting and mixing of a graft polymerization precursor (C) wherein said precursor is prepared by copolymerization of at least one vinyl monomer with at least one radical polymerizable organic peroxide represented by the general formula (a) or (b):

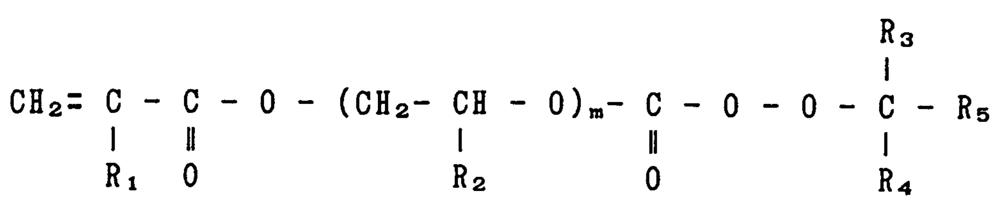

.....(a)

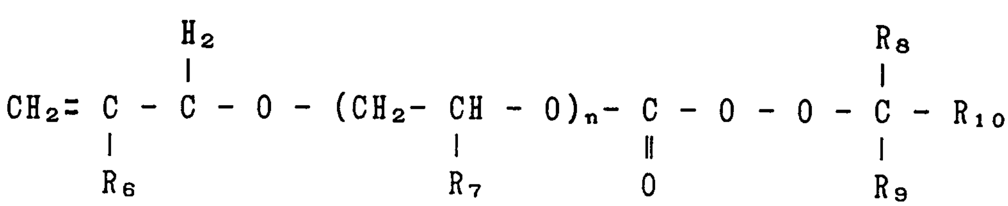

.....(b)

wherein $R_1$ is a hydrogen atom or an alkyl group having 1 or 2 carbon atoms, each of $R_2$ and $R_7$ is a hydrogen atom or a methyl group, $R_6$ is a hydrogen atom or an alkyl group having 1 to 4 carbon atoms, each of $R_3$, $R_4$, $R_8$ and $R_9$ is an alkyl group having 1 to 4 carbon atoms, each of $R_5$ and $R_{10}$ is an alkyl group having 1 to 12 carbon atoms, a phenyl group, an alkyl-substituted phenyl group or a cycloalkyl group having 3 to 12 carbon atoms, m is 1 or 2, and n is 0, 1 or 2, in the particles of the

epoxy group-containing olefin copolymer.

5. A thermoplastic resin composition according to claim 4 wherein said multi-phase structure thermoplastic resin is a graft polymer which is obtained by melting and mixing of the following components:
1 to 99 % by weight of said graft polymerization precursor (C), and
1 to 99 % by weight of said epoxy group-containing olefin copolymer (A) or said vinyl polymer or copolymer (B) obtained from at least one vinyl monomer.

6. A thermoplastic resin composition according to any of the claims 1 to 5 wherein said vinyl monomer is selected from the group consisting of vinyl aromatic monomers, acrylic or methacrylic ester monomers, acrylonitrile or methacrylonitrile, vinyl ester monomers, and mixtures thereof.

7. A thermoplastic resin composition according to claim 6 wherein said vinyl monomer is selected from the group consisting of styrene, methyl acrylate, ethyl acrylate , propyl acrylate, butyl acrylate, methyl methacrylate, ethyl methacrylate, propyl metacrylate, butyl methacrylate, acrylonitrile, methacrylonitrile, vinyl acetate, and mixtures thereof.

8. A thermoplastic resin composition according to any of the claims 1 to 7 wherein said epoxy group-containing olefin copolymer (A) is a copolymer constituted of 60 to 99.5% by weight of ethylene, 40 to 0.5% by weight of glycidyl acrylate or methacrylate, and 0 to 39.5% by weight of one of other unsaturated monomers.

9. A thermoplastic resin composition according to claim 8 wherein said epoxy group-containing olefin copolymer (A) is selected from the group consisting essentially of an ethylene-glycidyl methacrylate copolymer, an ethylene-glycidyl acrylate copolymer, an ethylene-glycidyl methacrylate-ethyl acrylate copolymer, an ethylne-glycidyl methacrylate-vinyl acetate copolymer.

10. A thermoplastic resin composition according to claim 1 or 2 wherein said acid group-containing olefin polymer (III) is an unsaturated carboxylic acid-grafted copolymer.

11. A thermoplastic resin composition according to claim 10 wherein said unsaturated carboxylic acid grafted-copolymer is a maleic acid anhydride-grafted polyolefin.

12. A thermoplastic resin composition according to claim 1 or 2 wherein said engineering plastics (I) is a polyester resin, said multi-phase structure thermoplastic resin (II) is a methyl methacrylate-grafted ethylene-glycidyl methacrylate copolymer, and said acid group-containing olefin polymer (III) is a maleic acid anhydride-grafted polyethylene.

13. A thermoplastic resin composition according to claim 1 or 2 wherein said engineering plastics (I) is a polyamide, said multi-phase structure thermoplastic resin (II) is a methyl methacrylate-grafted ethylene-glycidyl methacrylate copolymer, and said group-containing olefin polymer (III) is a maleic acid anhydride-grafted polyethylene.

14. A thermoplastic resin composition according to claim 1 or 2 wherein said engineering plastics (I) is a polyphenylene ether resin, said multi-phase structure thermoplastic resin (II) is a methyl methacrylate-grafted ethylene-glycidyl methacrylate copolymer, and said acid group-containing olefin polymer (III) is a maleic acid anhydride-grafted polyethylene.

15. A thermoplastic resin composition according to claim 1 or 2 wherein said engineering plastics (I) is a polycarbonate resin, said multi-phase structure thermoplastic resin (II) is a methyl methacrylate-grafted ethylene-glycidyl methacrylate copolymer, and said acid group-containing olefin polymer (III) is a maleic acid anhydride-grafted polyethylene.

16. A thermoplastic resin composition according to claim 1 or 2 wherein said engineering plastics (I) is a polyacetal resin, said multi-phase structure thermoplastic resin (II) is a styrene-grafted ethylene glycidyl methacrylate copolymer, and said acid group-containing olefin polymer (III) is a maleic acid anhydride-grafted polyethylene.

**17.** A thermoplastic resin composition according to claim 1 or 2 wherein said engineering plastics (I) is a ABS resin, said multi-phase structure thermoplastic resin (II) is a styrene-grafted ethylene-glycidyl methacrylate copolymer, and said acid group-containing olefin polymer (III) is a maleic acid anhydride-grafted polyethylene.

**18.** A thermoplastic resin composition according to claim 1 or 2 wherein said engineering plastics (I) is a polyphenylene sulfide resin, said multi-phase structure thermoplastic resin (II) is a styrene-grafted ethylene-glycidyl methacrylate copolymer, and said acid group-containing olefin polymer is a maleic acid anhydride-grafted polyethylene.